# EUROPEAN PATENT APPLICATION

(11) **EP 4 459 943 A1**
(43) Date of publication of application: **06.11.2024**
(21) Application number: 24173787.3
(22) Date of filing: 02.05.2024
(51) Int. Cl.: H04L 43/00, H04L 43/50, H04L 41/5009

(54) **AUTOMATION FRAMEWORK FOR REMOTE OPEN RAN TESTING**

(30) Priority: 03.05.2023 IN 202321031586; 29.04.2024 US 202418648698
(71) Applicant: Mavenir Systems, Inc., Richardson, TX 75081 (US)
(72) Inventor: Baker, John, 76208 Denton (US); Vijayan, Sijoy, 560103 Bangalore (IN); Rajagopal, Sridhar, 75025 Plano (US)
(74) Representative: Studio Torta S.p.A.

(57) **Abstract**

A method for implementing automated testing of an Open Radio Access Network (O-RAN) system in the cloud includes: hosting, in the cloud, the O-RAN test system; triggering an automation suite of an automation framework to execute a pre-defined set of test cases on the O-RAN test system; and transmitting test results including key performance indicators (KPIs) to at least a results repository hosted in the cloud; wherein the automation framework comprises i) a front end module hosted on a public cloud, and ii) a back end module hosted on one of a private cloud and the public cloud, and wherein the front end module and the back end module communicate via an application programming interface. The O-RAN test system comprises at least one of simulated radio units (RUs) and simulated user equipments (UEs) simulated by a test software, and the O-RAN test system is hosted on the public cloud.

## Description

### BACKGROUND OF THE DISCLOSURE

### 1. Field of the Invention

The present disclosure is related to Open Radio Access Network (O-RAN) wireless systems, and relates more particularly to testing of O-RAN components.

### 2. Description of Related Art

O-RAN testing presents various that need to be addressed, which include:
1. Integration time, end-to-end (E2E) validation, field testing;
2. Large number of test cases for full validation;
3. Dynamic changes in parameters with RAN Intelligent Controller (RIC) and artificial intelligence (AI) and/or machine learning (ML);
4. Accessibility to O-RAN testing;
5. Asynchronous release of software components across different O-RAN vendors; and
6. Cost for small companies or companies that only provide a certain component of the open RAN eco-system.

Current O-RAN testing of network products (components) is lab-based, i.e., not performed remotely. Physical test-lines are created in a local lab environment for various types of test activities. Current focus from O-RAN test and integration centers (OTICs) and test houses is tailored towards satisfying the standard O-RAN test cases specified in the O-RAN-alliance based specification documents. However, in order to deploy at an actual operating location (e.g., of a customer), merely satisfying the standard O-RAN test cases is insufficient, and it is necessary to perform tens of thousands of test cases with configurations specific to the customer's needs. This takes significant time and effort, even after initial integration of a component.

Therefore, there is a need for a more efficient, elegant and automated method of testing O-RAN products.

### SUMMARY

Accordingly, what is desired is a method to achieve accelerated testing of O-RAN products from multiple vendors in a public and/or private cloud environment.

According to an example embodiment, parts of or entire O-RAN testing can be implemented in a cloud using a novel automation framework, where the automation framework i) controls both the O-RAN testing as well as interfacing with a public cloud that acts a portal for O-RAN product vendors to submit their codes and/or system configuration for testing, and ii) stores the results securely.

According to an example embodiment, an automation framework for open RAN testing that can be remotely controlled and used, where the automation framework interfaces with a public cloud on the front end and towards an open RAN test system on the back end.

According to an example embodiment, the O-RAN test system on the backend can run on a public or private cloud, where parts of the O-RAN test system can be simulated, while other parts of the O-RAN test system use i) the network product that is the subject of testing, or ii) actual commercial components.

According to an example embodiment, the O-RAN test system on the backend can run on a public or private cloud, whereas other parts, e.g., radios and commercial phones, are run on a local lab, instead of using a simulator.

According to an example embodiment, the automation framework is split into two components, including: i) a front end towards the public cloud for a user remote portal access; and ii) a back end where the O-RAN test-lines are present, which back end can be in either the public cloud or in a lab. The two components of the automation framework can be provided by multiple vendors and can communicate with each other, e.g., via an agreed (standardized) application programming interface (API).

According to an example method of using the automation framework, the software configuration, the hardware configuration, the test type (e.g., end-to-end (E2E) or wrap-around of the component under test), and the software loads can be remotely configured by a user for the system under test, and a test profile can be selected for automated testing and the generated results from the testing can be securely stored back in the cloud.

According to an example embodiment, the O-RAN testing can be done on a "pay as you use" basis, where the system is active and is charged only when the testing is active, and the charging is based on the amount of resources and tools utilized in the cloud during the O-RAN test execution.

For this application the following terms and definitions shall apply:

The term "network" as used herein includes both networks and internet works of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### DESCRIPTION OF THE DRAWINGS

FIG. 1 shows the architecture of an example automation framework according to the present disclosure.
FIG. 2 illustrates an example embodiment of an automation framework, a back end of which automation framework enables at least a part of the testing to be implemented in a local lab and use actual remote radio units (RRUs) and user equipments (UEs).
FIG. 3 illustrates an example embodiment of the automation framework comprising two components, a front end access portal and a back end execution framework.
FIG. 4 illustrates an example embodiment of the automation framework used for capacity testing in the cloud.
FIG. 5 illustrates how the O-RAN test system can be used by various parts of the O-RAN eco-system participants.

### DETAILED DESCRIPTION

According to an example embodiment of the method according to the present disclosure, to accelerate testing in the cloud without human intervention and interaction, a novel automation framework is provided to enable execution of tens of thousands of test cases. This automation framework can be broken into a front end portion (module) and a back end portion (module). The front end module provides the user (e.g., a vendor) the ability to:
- Select test equipment and configuration;
- Load the necessary software for system under test;
- Select test-suite and test-cases for specific test runs;
- Add new test cases;
- Requeue failed jobs;
- Terminate jobs;
- Page for viewing results, performance KPIs, faults, alarms, downloading logs;
- Check current progress; and
- Store the results securely in a repository.

The back end module provides the ability to:
- Bring up and/or bring down the setup with the image provided;
- Ensure that bring-up is successful before running the selected test-cases defined in test-suites;
- Inter-work with various network nodes to execute the test-case, collect logs, parse, and declare the results; and
- Once the execution is completed, provide the user with a summary.

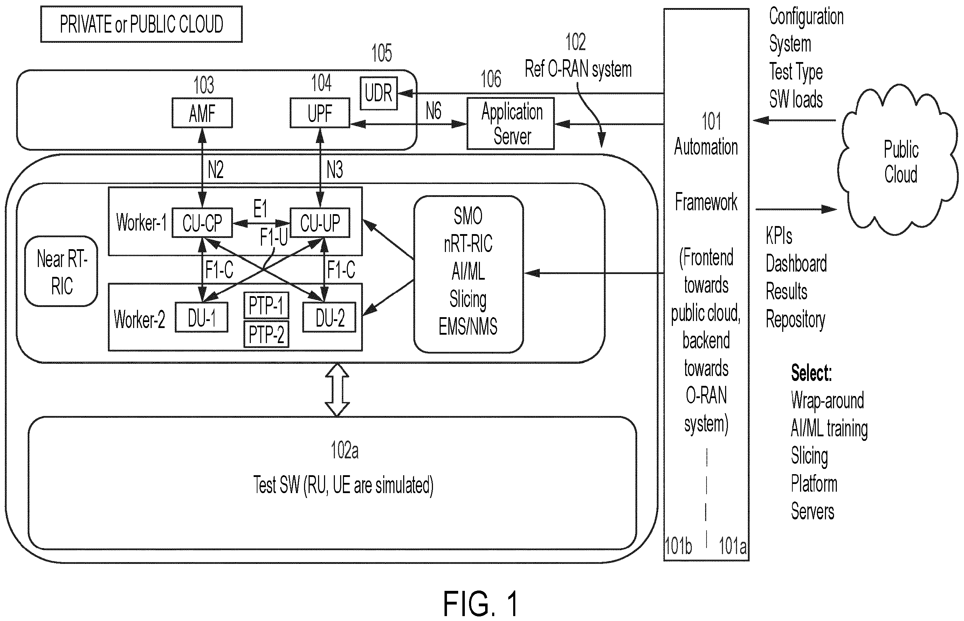

FIG. 1 shows the architecture of an example automation framework 101 and the reference O-RAN system 102 according to the present disclosure. The user can remotely load the configuration type for the hardware and software, the test type (e.g., E2E or wraparound), and the actual software (SW) under test on a portal in a public cloud. The actual software under test refers to the software that can be implemented as DU and CU-CP/CU-UP application worker nodes in the O-RAN system 102. Subsequently, an automation suite (which is implemented as part of the automation framework) is triggered to execute a pre-defined set of test cases on a reference O-RAN test system. The automation suite consists of a set of test cases that are automated to be executed on the reference O-RAN test system. The reference O-RAN (test) system 102 can also be hosted on the public cloud with simulated radios and/or phones (e.g., simulated by the test SW 102a in FIG. 1). The following components are shown as part of the reference O-RAN system 102 in FIG. 1: Near RT-RIC; CU-CP; CU-UP; DU-1; DU-2; SMO; nRT-RIC; AI/ML; slicing; EMS/NMS; and Test SW (e.g., simulating RU and/or UE). The O-RAN (test) system 102 in the cloud can be brought up and down as needed for testing and the cost (charging model) for testing can be based on the uptime of the system.

The automation framework 101 shown in FIG. 1 can have a Front End (FE) portion (module) 101a which i) can be hosted on a public cloud and ii) has an ability to interact with the automation framework Back End (BE) portion (module) 101b, which will be hosted along with the O-RAN reference system 102 (e.g., either on public cloud or in the lab, on a private cloud) and controls the equipment and executes the test cases. Via the FE 101a, a user can access KPIs which, among other test results, can be displayed on a dashboard and/or stored in a results repository (e.g., hosted on the public cloud). Each of FE 101a and BE 101b can be implemented, e.g., as a software module comprising program instructions stored on a non-transitory computer-readable medium, which software module can run on any commercial off-the-shelf hardware having a processor to execute the software program instructions. Also shown in FIG. 1 are: AMF 103; UPF 104; UDR 105; and Application server 106 that are required for E2E testing of the O-RAN reference system. The two components (modules) 101a and 101b of the automation framework can communicate with each other via an API, for example.

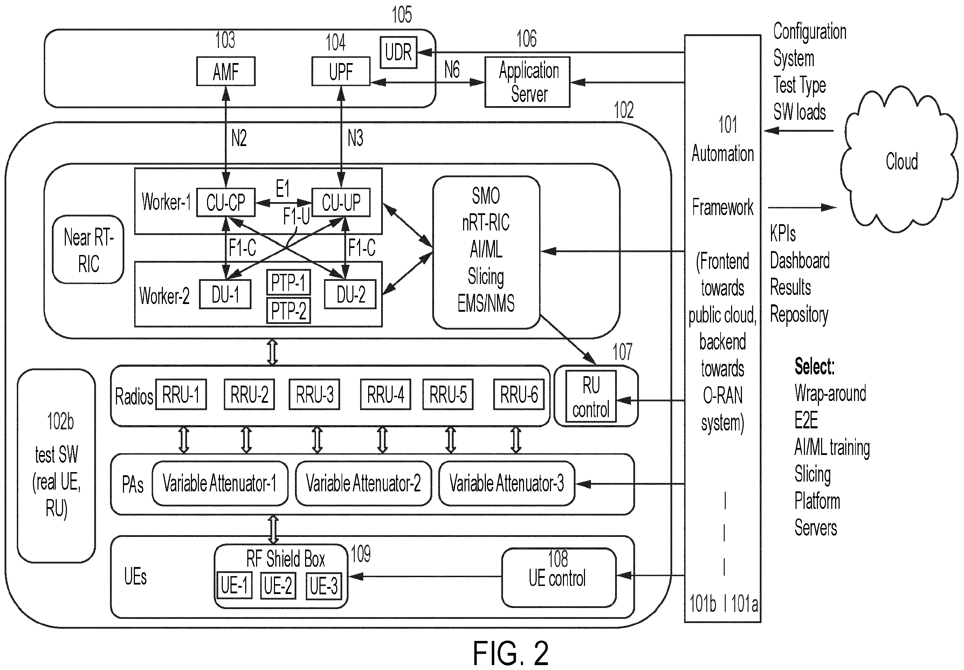

In an example embodiment of the invention shown in FIG. 2, a part of the testing or the entire testing can be done in a local lab (e.g., private cloud) with the automation framework back end portion (module) 101b and use actual commercial radios (e.g., remote radio units (RRUs) and/or user equipments (UEs), e.g., mobile phones, for testing (by a test software), while the front end portion (module) 101a of the automation framework 101 still resides in the public cloud. In the example embodiment of FIG. 2, the test SW 102b is used to test actual UEs, e.g., UE-1, UE-2 and UE-3 in radio frequency (RF) shield box 109 (which RF shield box 109 is connected to UE control module 108), and actual RRUs, e.g., RRU-1, RRU-2, RRU-3, RRU-4, RRU-5 and RRU-6, which are connected to RU control module 107. While test SW 102a in FIG. 1 used simulated radios and UEs, test SW 102b is used to control real radios and actual UEs in the test execution. The two components (modules) 101a and 101b of the automation framework can communicate with each other via an API, for example.

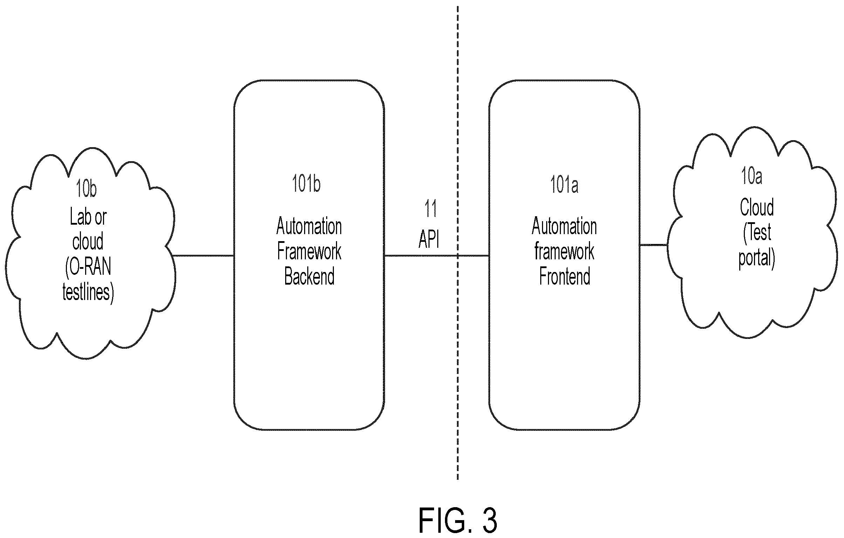

In an example embodiment of the invention shown in FIG. 3, the automation framework is split into two components, which include: i) a front end 101a towards public cloud (referenced as 10a in FIG. 3) for a user remote (test) portal access; and ii) a backend 101b where the O-RAN test-lines are present, which may be in either public cloud or in a lab (referenced as 10b in FIG. 3). The two components 101a and 101b of the automation framework can communicate with each other via an API 11.

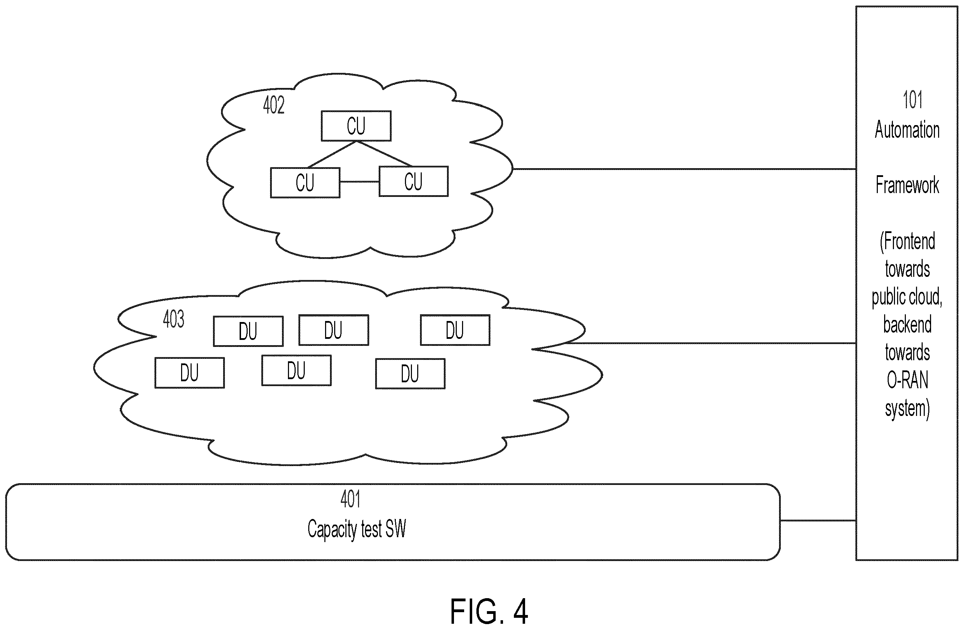

In an example embodiment of the invention shown in FIG. 4, the automation framework 101 can also be used for capacity testing (using the capacity test SW module 401) in the cloud, where multiple instances of centralized units (CUs) 402 and distributed units (DUs) 403 can be simulated as part of the O-RAN test system. This example embodiment can be used, e.g., for at least one of the following tests: 1) Xn interface testing; 2) Scalability; 3) Mobility and/or handover (HO) testing; 4) DU Performance Benchmarking Testing; 5) CU Performance Benchmarking Testing; and 6) E2E Network Call Model Simulation Testing.

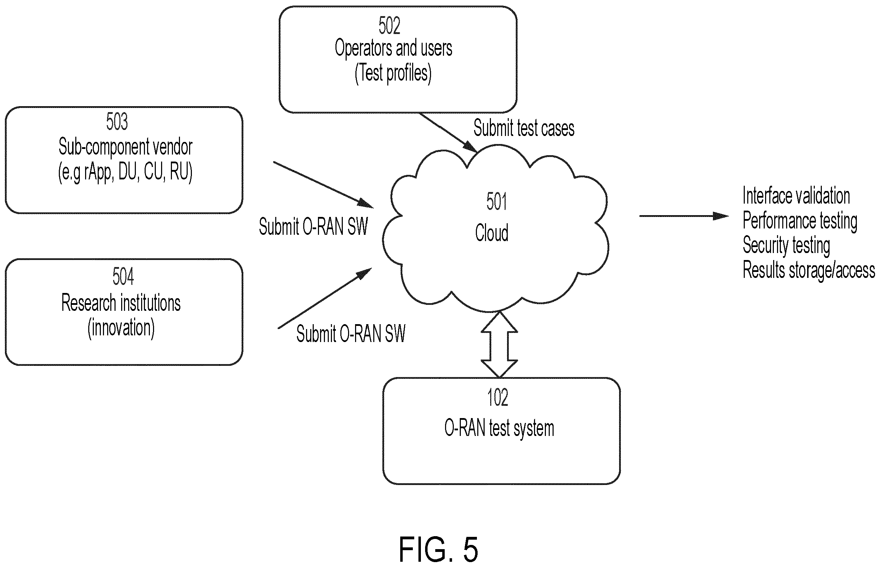

FIG. 5 illustrates how the (reference) O-RAN test system 102 can be used by various parts of the O-RAN eco-system participants (e.g., operators and users, generally referenced as 502; sub-component vendors 503 (e.g., for rApp, DU, CU and/or RU); and research institutions 504) to enhance innovation and to enable small companies to load their sub-components for testing (e.g., performance testing and security testing) and validation (e.g., interface validation) via a remote cloud portal (e.g., in the cloud 501). Also, a network operator can provide test profiles with thousands of automated tests to be run, which can be used as a pre-certification requirement for a vendor's product to be incorporated into the operator's network. In addition, sub-component vendors can also submit additional test cases to be run on top of a predefined set of test cases available for testing.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:
O-RAN: Open RAN alliance
AMF: Access and Mobility Management Function
SMF: Session Management Function
UDR: Unified Data Repository
CU: Centralized Unit
CU-CP: Centralized Unit - Control Plane
CU-UP: Centralized Unit - User Plane
DU: Distributed Unit
Near RT-RIC: Near Real Time - Radio Access Network Intelligent Controller
SMO: Service Management and Orchestration
nRT-RIC: non-Real Time - Radio Access Network Intelligent Controller
EMS/NMS: Element Management System / Network Management System
RU : Radio Unit
UE: User Equipment
SW : Software
KPI: Key Performance Indicator
AI/ML: Artificial Intelligence / Machine Learning
E2E: End to End
API: Application Programming Interface
rApp: Application running on a non-real-time radio access network intelligent controller
UPF: User Plane Function

## Claims

1. A method for implementing automated testing of an Open Radio Access Network (O-RAN) system in the cloud, comprising:
hosting, in the cloud, the O-RAN test system;
triggering an automation suite of an automation framework to execute a pre-defined set of test cases on the O-RAN test system; and
transmitting test results including key performance indicators (KPIs) to at least a results repository hosted in the cloud;
wherein the automation framework comprises i) a front end module hosted on a public cloud, and ii) a back end module hosted on one of a private cloud and the public cloud, and wherein the front end module and the back end module communicate via an application programming interface.

2. The method according to claim 1, wherein the O-RAN test system comprises at least one of simulated radio units (RUs) and simulated user equipments (UEs) simulated by a test software, and wherein the O-RAN test system is hosted on the public cloud.

3. The method according to claim 2, wherein the front end module of the automation framework enables test portal access for a user, and wherein the back end module comprises O-RAN test lines for implementing the pre-defined set of test cases.

4. The method according to claim 1, wherein the O-RAN test system comprises at least one of remote radio units (RRUs) and user equipments (UEs) to be tested by a test software.

5. The method according to claim 4, wherein the front end module of the automation framework enables test portal access for a user, and wherein the back end module comprise O-RAN test lines for implementing the pre-defined set of test cases.

6. The method according to claim 1, wherein multiple centralized units (CUs) and distributed units (DUs) are simulated as part of the O-RAN test system for capacity testing using the automation framework and a capacity testing module.

7. The method according to claim 6, where the capacity testing comprises at least one of the following tests: Xn interface testing; scalability testing; mobility testing; handover testing; DU performance benchmarking testing; CU performance benchmarking testing; and end-to-end (E2E) network call model simulation testing.

8. An automation framework comprising at least one non-transitory computer-readable medium storing program instructions which, when executed on a processor, perform a method of automated testing of an Open Radio Access Network (O-RAN) test system in the cloud, the method comprising:
hosting, in the cloud, the O-RAN test system;
triggering an automation suite of an automation framework to execute a pre-defined set of test cases on the O-RAN test system; and
transmitting test results including key performance indicators (KPIs) to at least a results repository hosted in the cloud;
wherein the program instructions comprise i) a front end module hosted on a public cloud, and ii) a back end module hosted on one of a private cloud and the public cloud, and wherein the front end module and the back end module communicate via an application programming interface.

9. The automation framework according to claim 8, wherein the O-RAN test system comprises at least one of simulated radio units (RUs) and simulated user equipments (UEs) simulated by a test software, and wherein the O-RAN test system is hosted on the public cloud.

10. The automation framework according to claim 9, wherein the front end module of the automation framework enables test portal access for a user, and wherein the back end module comprises O-RAN test lines for implementing the pre-defined set of test cases.

11. The automation framework according to claim 8, wherein the O-RAN test system comprises at least one of remote radio units (RRUs) and user equipments (UEs) to be tested by a test software.

12. The automation framework according to claim 11, wherein the front end module of the automation framework enables test portal access for a user, and wherein the back end module comprises O-RAN test lines for implementing the pre-defined set of test cases.

13. The automation framework according to claim 8, wherein multiple centralized units (CUs) and distributed units (DUs) are simulated as part of the O-RAN test system for capacity testing using the automation framework and a capacity testing module.

14. The automation framework according to claim 13, where the capacity testing comprises at least one of the following tests: Xn interface testing; scalability testing; mobility testing; handover testing; DU performance benchmarking testing; CU performance benchmarking testing; and end-to-end (E2E) network call model simulation testing.
